# FASCICULE DE BREVET EUROPEEN

(11) **EP 2 304 190 B1**
(45) Date de publication et mention de la délivrance du brevet: **07.08.2013**
(21) Numéro de dépôt: 09753868.0
(22) Date de dépôt: 26.05.2009
(51) Int. Cl.: F01D 7/00, F04D 29/32

(54) **SYSTEME SIMPLIFIE DE COMMANDE DE CALAGE DE PALE D'UNE HELICE D'UN TURBOMOTEUR POUR AERONEF**
VEREINFACHTES STEUERSYSTEM FÜR DIE BLATTVERSTELLUNG EINER FLUGZEUGTRIEBWERKSLUFTSCHRAUBE.
SIMPLIFIED SYSTEM FOR CONTROLLING PROPELLER BLADE PITCH IN AN AIRCRAFT TURBOSHAFT ENGINE

(30) Priorité: 29.05.2008 FR 0853502
(43) Date de publication de la demande: 06.04.2011
(73) Titulaire: Snecma, 75015 Paris (FR)
(72) Inventeur: GALLET, François, F-75012 Paris (FR)
(74) Mandataire: Ilgart, Jean-Christophe
(86) Numéro de dépôt international: PCT/EP2009/056357
(87) Numéro de publication internationale: WO 2009/144213

(56) Documents cités:
- US-A- 5 186 608
- US-A- 5 779 446

## Description

### DOMAINE TECHNIQUE

La présente invention se rapporte de façon générale à un système de commande de calage de pale(s) d'une hélice d'un turbomoteur pour aéronef, par exemple du type connu du document US 5 779 446.

L'invention se rapporte également à une hélice équipée d'un tel système de commande, ainsi qu'à un procédé de pilotage de ce système.

L'invention s'applique à tout type d'hélice, hélice simple ou système d'hélices contrarotatives, de préférence pour turboréacteur ou turbopropulseur.

### ETAT DE LA TECHNIQUE ANTERIEURE

Un turbopropulseur est classiquement équipé d'un système de commande de calage des pales de son hélice, afin d'adapter l'orientation de ces pales à la vitesse de l'aéronef.

Le système est conçu de manière à ce que les pales restent fixes en incidence lorsque le système de commande n'est pas actionné, et doit donc permettre de résister à l'action du couple généré par la force aérodynamique s'exerçant sur les pales durant la rotation de l'hélice. Pour ce faire, le système est généralement équipé d'un mécanisme de blocage, habituellement du type assurant un contact/frottement entre deux pièces, tel qu'un frein à disque. Pour commander les pales en incidence, il est donc nécessaire d'effectuer une étape préliminaire de déblocage des pales en incidence, par rupture du contact entre les deux pièces du mécanisme de blocage.

Bien entendu, la présence du mécanisme de blocage complexifie fortement la conception du système de commande, ce qui engendre des inconvénients en termes de masse, de fiabilité et d'encombrement.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un système de commande de calage de pale d'une hélice d'un turbomoteur pour aéronef, comprenant :
- une première piste sensiblement annulaire destinée à être raccordée à au moins une pale d'hélice, et dont la rotation est destinée à assurer le calage en incidence de cette pale, ladite première piste présentant au moins une encoche délimitée par deux surfaces B1, B2 ;
- une seconde piste sensiblement annulaire, concentrique à la première piste ;
- un élément d'actionnement de la première piste, sensiblement annulaire, agencé entre les première et seconde pistes et concentrique à celles-ci, ledit élément d'actionnement présentant au moins une portion angulaire évidée délimitée par deux surfaces A1, A2 à distance l'une de l'autre ; et
- au moins un élément de blocage prévu entre les première et seconde pistes, logé dans ladite portion angulaire évidée de l'élément d'actionnement, et dans l'encoche de la première piste,
ledit élément de blocage étant apte à occuper, durant le fonctionnement du turbomoteur :
- une position normale d'arc-boutement, dans laquelle il est d'une part en contact avec la seconde piste en étant disposé entre les deux surfaces A1, A2 de l'élément d'actionnement, à distance de celles-ci, et d'autre part en contact avec l'encoche, position dans laquelle la force aérodynamique s'exerçant sur la pale de l'hélice en rotation engendre un couple de sens donné sur ladite première piste en provoquant un premier effort de contact F1, sur l'élément de blocage, de celle des deux surfaces B1, B2 de l'encoche située la plus en amont dans ledit sens donné du couple, et générant un effort de réaction R de ladite seconde piste sur ledit élément de blocage, le premier effort de contact F1 et l'effort de réaction R assurant un arc-boutement des première et seconde pistes, rendant celles-ci solidaires en rotation ; et
- une position de déblocage, dans laquelle l'élément de blocage est au contact de ladite surface B1 de l'encoche la plus en amont, et aussi de l'une des deux surfaces A1, A2 de l'élément d'actionnement, cette position de déblocage étant assurée par l'application d'un couple d'actionnement sur ledit élément d'actionnement, de valeur permettant d'exercer, sur l'élément de blocage et avec ladite surface A1, A2 concernée, un second effort d'appui F2 suffisant pour rendre nul ledit effort de réaction R de ladite seconde piste sur ledit élément de blocage, et rompre ainsi ledit arc-boutement, ladite position de déblocage autorisant le déplacement en rotation, par rapport à la seconde piste, selon le sens du couple d'actionnement, de l'ensemble comportant ladite première piste, ledit élément de blocage et ledit élément d'actionnement.

L'invention est remarquable en ce qu'elle permet un blocage automatique des pales lorsqu'aucun couple d'actionnement n'est fourni à l'élément d'actionnement, et ce du fait de l'arc-boutement créé entre les première et seconde pistes, par l'élément de blocage occupant sa position normale d'arc-boutement.

En revanche, lorsqu'une modification du calage des pales est requise, il est procédé à l'application d'un couple de valeur et de sens appropriés sur l'élément d'actionnement, ce couple permettant à la fois de débloquer le système en plaçant l'élément de blocage dans sa position de déblocage, et d'entraîner la rotation de la première piste assurant le calage en incidence des pales. Il est noté que le déblocage et la rotation de la première piste sont provoqués de manière simultanée ou quasi-simultanée.

Ainsi, le système de commande de calage selon l'invention est de conception simplifiée par rapport à celles rencontrées dans l'art antérieur, puisqu'une même et unique commande permet d'assurer le déblocage et le déplacement des pales en incidence. Aucun mécanisme séparé de blocage n'est donc requis, comme cela était le cas antérieurement, ce qui engendre des avantages en termes de masse, de fiabilité et d'encombrement.

De préférence, le système comprend des moyens élastiques de rappel couplés audit élément d'actionnement, et permettant, lorsque ce dernier n'est pas soumis audit couple d'actionnement, de déplacer en rotation cet élément d'actionnement relativement à ladite première piste, de manière à ramener ledit élément de blocage en position normale d'arc-boutement.

De préférence, ladite première piste est disposée extérieurement par rapport à ladite seconde piste, bien qu'une solution inverse dans laquelle ladite seconde piste est disposée extérieurement par rapport à ladite première piste peut être envisagée, sans sortir du cadre de l'invention.

Préférentiellement, le système comprend un moteur d'actionnement commandant en rotation ledit élément d'actionnement. C'est donc ce moteur qui est destiné à délivrer le couple d'actionnement provoquant le déplacement de l'élément de blocage dans sa position de déblocage, ainsi que la rotation de la première piste par rapport à la seconde piste.

De préférence, ledit élément de blocage est un rouleau, et lesdites surfaces A1, A2, B1, B2 avec lesquelles il coopère sont des surfaces sensiblement planes. Une alternative consiste à prévoir que ledit élément de blocage est une bille, et que lesdites surfaces A1, A2, B1, B2 avec lesquelles il coopère sont des surfaces sensiblement sphériques. Dans chacun de ces cas, il est donc prévu des éléments roulant les uns sur les autres, ce qui limite avantageusement les frottements par rapport à ceux rencontrés sur les mécanismes de blocage du type freins à disques de l'art antérieur.

De préférence, le système comprend plusieurs éléments de blocage espacés angulairement les uns des autres autour de l'axe des première et seconde pistes, chacun logé dans sa propre portion angulaire évidée de l'élément d'actionnement, et dans sa propre encoche de la première piste. Cela permet de répartir de façon plus homogène, dans la direction circonférentielle, les efforts assurant l'arc-boutement des première et seconde pistes. De plus, dans la position normale d'arc-boutement, chaque élément de blocage doit donc supporter des efforts de compression d'intensité plus faible par rapport à ceux rencontrés dans la solution à élément unique, ce qui permet notamment d'améliorer la fiabilité du système.

Il est possible de prévoir le système commandant une unique pale de l'hélice du turbomoteur, ou bien commandant simultanément une pluralité de pales de l'hélice du turbomoteur.

De préférence, le système comporte un organe coulissant destiné à coopérer avec les pales de sorte que son déplacement conduise ces pales à se rapprocher / s'éloigner de leur position d'incidence minimale, ledit organe coulissant étant piloté par des moyens rotatifs de commande permettant de transformer leur mouvement rotatif en un mouvement de coulissement dudit organe, lesdits moyens rotatifs de commande étant solidaires en rotation de ladite première piste.

L'invention a également pour objet une hélice pour turbomoteur d'aéronef comprenant au moins un système de commande de calage de pale tel que décrit ci-dessus.

Cette hélice comprend de préférence un rotor d'hélice destiné à tourner autour d'un axe longitudinal de l'hélice par rapport à un stator, et portant des pales, ladite hélice comprenant en outre ledit système de commande de calage des pales, permettant de déplacer ces dernières entre une position d'incidence minimale et une position d'incidence maximale, ledit système de commande de calage comprenant un organe coulissant selon l'axe longitudinal, coopérant avec lesdites pales de sorte que son déplacement conduise lesdites pales à se rapprocher / s'éloigner de leur position d'incidence minimale, ledit organe coulissant étant piloté par des moyens rotatifs d'actionnement permettant de transformer leur mouvement rotatif autour de l'axe longitudinal en un mouvement de coulissement dudit organe selon le même axe, lesdits moyens rotatifs de commande étant solidaires en rotation de ladite première piste et la seconde piste étant solidaire en rotation d'un arbre d'entraînement portant ledit rotor d'hélice, ledit système de commande de calage comprenant en outre un moteur d'actionnement permettant d'appliquer ledit mouvement rotatif auxdits seconds moyens rotatifs d'actionnement, en étant raccordés audit élément d'actionnement.

De préférence, lesdits moyens rotatifs d'actionnement sont constitués par une vis à billes.

De préférence, ledit organe coulissant est constitué par un cône coulissant coopérant avec un doigt excentré de chacune des pales lui étant associées.

L'invention a également pour objet une turbomachine pour aéronef, comprenant au moins une hélice telle que décrite ci-dessus.

La turbomachine comprend de préférence un système d'hélices contrarotatives, avec chacune de ses deux hélices conçue de la manière exposée précédemment, cette turbomachine étant de préférence un turbopropulseur, mais pouvant alternativement être un turboréacteur. Naturellement, dans ce dernier cas, le système d'hélices est destiné à constituer la soufflante du turboréacteur.

Enfin, l'invention a aussi pour objet un procédé de pilotage d'un système de commande de calage de pale d'une hélice d'un turbomoteur, tel que décrit ci-dessus. Selon ce procédé, lorsqu'un calage en incidence est requis, il est appliqué un couple d'actionnement approprié audit élément d'actionnement.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'une partie d'hélice pour turbomoteur d'aéronef, selon un mode de réalisation préféré de la présente invention ;
- la figure 2 représente une vue en perspective d'un module de transmission et de blocage équipant le système de commande de calage de pale de l'hélice de la figure 1 ;
- la figure 3 représente ledit module de transmission et de blocage, en coupe transversale prise selon la ligne III-III de la figure 1, avec l'élément de blocage du module occupant sa position normale d'arc-boutement ;
- la figure 4 représente une vue similaire à celle de la figure 3, avec l'élément de blocage du module occupant sa position de déblocage, adoptée lors d'un calage des pales visant à réduire l'incidence de celles-ci ;
- la figure 5 représente une vue similaire à celle de la figure 4, avec l'élément de blocage du module occupant sa position de déblocage, adoptée lors d'un calage des pales visant à augmenter l'incidence de celles-ci ;
- la figure 6 représente le module de transmission et de blocage, selon un autre mode de réalisation préféré de la présente invention ; et
- la figure 7 représente le module de transmission et de blocage, selon encore un autre mode de réalisation préféré de la présente invention.

### EXPOSÉ DÉTAILLÉ DE MODES DE RÉALISATION PRÉFÉRÉS

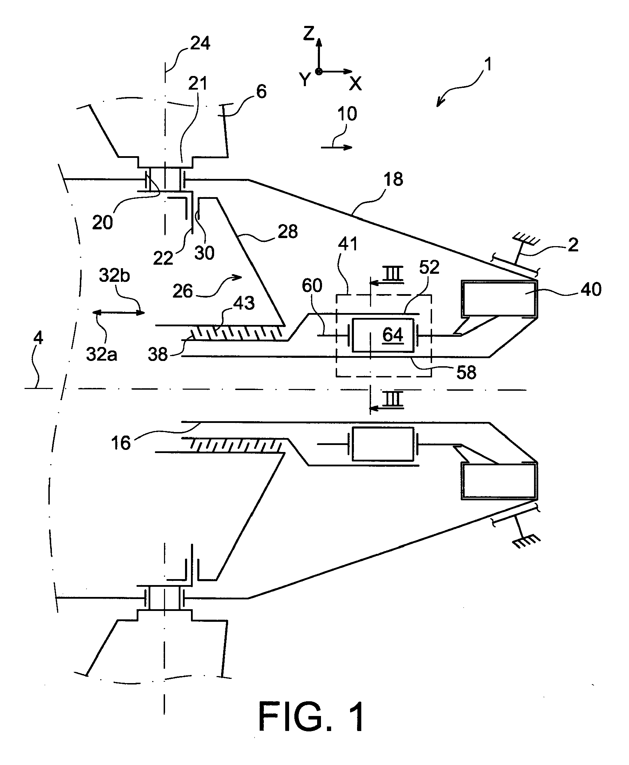

En référence à la figure 1, on peut apercevoir une partie d'une hélice 1 d'un turbopropulseur selon un mode de réalisation préféré de la présente invention, par exemple appartenant à un système d'hélices contrarotatives.

L'axe X correspond à la direction longitudinale de l'hélice 1, direction qui correspond également à la direction longitudinale du turbopropulseur destiné à intégrer une telle hélice 1. L'axe Y correspond quant à lui à la direction transversale de l'hélice 1, et l'axe Z à la direction verticale ou de la hauteur, ces trois axes étant orthogonaux entre eux.

L'hélice 1 comprend un stator ou carter 2, centré sur un axe longitudinal 4, parallèle à l'axe X. Ce stator 2 est de façon connue destiné à être solidaire des autres carters de la turbomachine. A cet égard, il est indiqué que l'hélice 1 est de préférence conçue de manière à être dépourvue de carénage radial extérieur entourant les pales, à savoir du type « Open Rotor », comme visible sur la figure 1.

De plus, une direction principale d'écoulement de l'air à travers l'hélice 1 est représentée schématiquement par la flèche 10 parallèle à l'axe X, cette direction principale d'écoulement servant également de référence pour les termes « amont » et « aval » employés ci-dessous.

A titre indicatif, dans le cas d'un système d'hélices contrarotatives, les deux hélices (une seule étant représentée) sont destinées à tourner dans des sens opposés autour de l'axe 4 sur lequel elles sont centrées, les rotations s'effectuant par rapport au stator 2 restant immobile.

Dans toute la description, il est noté que la notion de « vitesse de rotation » d'un élément donné correspond à sa vitesse de rotation par rapport au stator immobile 2, selon l'axe longitudinal 4, à moins qu'il n'en soit disposé autrement.

L'hélice 1 comprend un arbre d'entraînement 16 centré sur l'axe 4, et destiné à être entraîné en rotation par un dispositif de transmission mécanique (non représenté), par exemple formant réducteur à train épicycloïdal, lui-même entraîné par la turbine de la turbomachine.

Cet arbre creux 16 porte fixement à son extrémité aval un rotor 18 logeant au niveau de son extrémité radiale extérieure, à savoir au niveau de sa couronne circonférentielle, des pales d'hélices 6. Pour ce faire, des orifices 20 sont pratiqués dans le rotor 18 centré sur l'axe 4 pour loger le pied 21 des pales 6, chacune de ces dernières disposant d'un doigt 22 excentré par rapport à un axe principal 24 de la pale, correspondant de préférence à un axe radial du système d'hélice 1.

Il est noté que le rotor 18 prend grossièrement une forme tronconique issue de l'extrémité aval de l'arbre entraînement 16, et s'ouvrant vers l'amont.

De manière connue, les doigts 22 excentrés et faisant saillie radialement vers l'intérieur appartiennent à un système de commande de calage 26 des pales, permettant de déplacer ces dernières entre une position d'incidence minimale et une position d'incidence maximale par rapport à l'axe 4. Le déplacement de chaque pale 6 entre ces deux positions s'effectue par pivotement de celle-ci sur elle-même, c'est-à-dire autour de son axe principal 24, qui correspond également à l'axe de l'orifice 20 associé.

Pour ce faire, le système de commande de calage 26 comprend un premier organe coulissant, par exemple du type cône de commande 28 centré sur l'axe 4, et capable de coulisser selon ce même axe par rapport au stator.

Ce cône de commande 28, par exemple s'ouvrant vers l'amont comme représenté, comprend au niveau de son extrémité amont de diamètre le plus important une pluralité d'orifices 30 permettant de loger les doigts excentrés 22 des pales. Comme cela est également connu de l'homme du métier, le déplacement du cône 28 selon un premier sens de coulissement 32a, à savoir vers l'amont selon l'axe 4, conduit les pales 6 à se rapprocher de leur position d'incidence minimale, également dite position d'angle minimal ou encore position neutre, en particulier recherchée pour effectuer une mise en drapeau de l'hélice 1. Comme évoqué précédemment, la rotation des pales 6 au sein de leurs orifices 20 selon leurs axes 24, vers leur position neutre opposée à celle montrée sur la figure 1, s'effectue en réponse à l'appui du cône en translation 28 sur les doigts excentrés 22 qu'il porte. Sur la figure 1, le cône 28 est en effet représenté dans sa position de fin de course dans le second sens de coulissement 32b, où il permet aux pales 6 d'adopter leur position d'incidence maximale, opposée à la position neutre assurant la mise en drapeau de l'hélice. Néanmoins, le système 1 pourrait alternativement être conçu de sorte que la position neutre des pales 6a soit obtenue avec le cône 28 placé en fin de course dans ce second sens de coulissement 32b opposé au premier 32a, sans sortir du cadre de l'invention.

En référence toujours à la figure 1, de la même manière que celle décrite ci-dessus, le déplacement du cône 28 selon le second sens de coulissement 32b, à savoir vers l'aval selon l'axe 4, conduit donc les pales 6 à se rapprocher de leur position d'incidence maximale. Ici encore, la rotation des pales 6 selon leurs axes 24, vers leur position d'incidence maximale, s'effectue en réponse de l'appui du cône en translation 28 sur les doigts excentrés 22 qu'il porte.

Il est noté qu'en raison du logement des doigts excentrés 22 dans les orifices 30 du cône, éventuellement par l'intermédiaire de rotules, l'arbre 16, le rotor 18 et les pales 6 forment conjointement un ensemble qui est solidaire en rotation selon l'axe 4. A titre indicatif, le déplacement des doigts 22 et du cône 28 peut prendre la forme d'une combinaison d'une translation suivant l'axe 4 et d'une rotation autour de cet axe. Toujours à titre indicatif, il est possible de contourner ce double mouvement en introduisant un anneau entre les doigts excentrés du pied de pale, et ce même cône. Le mouvement de rotation précité s'effectue alors entre l'anneau et le cône, impliquant par conséquent que ce dernier ne se meut plus qu'en translation axiale.

Pour assurer la translation du cône de commande 28 selon les sens 32a et 32b, le système de commande de calage 26 est équipé de moyens rotatifs d'actionnement, par exemple du type vis à billes 38, centrée sur l'axe 4. Cette vis 38 est conçue de manière classique, de façon à permettre de transformer son mouvement rotatif autour de l'axe 4, en un mouvement de coulissement du cône 28 selon ce même axe 4, à la manière d'une vis sans fin.

La vis 38 se situe autour de l'arbre 16, et est elle-même entourée par le cône de commande 28, dont une portion intérieure 43 sensiblement cylindrique coopère avec le filetage extérieur de la vis 38, restant en permanence fixe en translation par rapport au rotor 18 et au stator 2. A cet égard, il est noté que le cône 28 est le seul des éléments de l'hélice 1 précités à pouvoir être déplacé en translation selon l'axe 4 par rapport au stator 2, les autres éléments restant fixes en translation les uns par rapport aux autres, et par rapport à ce même stator 2.

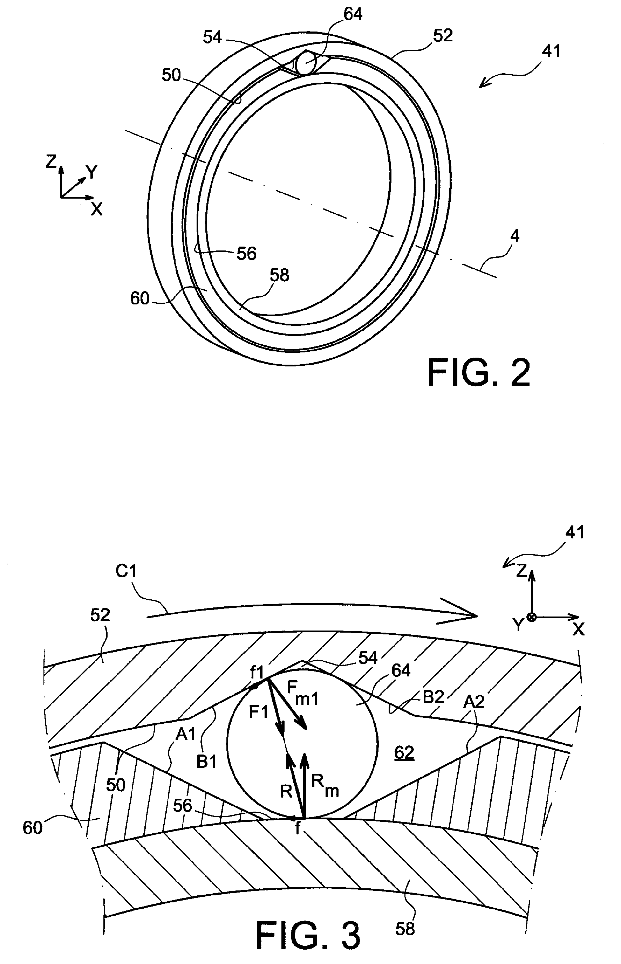

L'extrémité aval de la vis à billes 38 coopère indirectement avec un moteur 40 permettant d'appliquer, via un module de transmission et de blocage 41, le mouvement rotatif à cette même vis, en vue d'un déplacement en translation du cône 28. Il est par exemple prévu que le moteur 40 dispose d'un stator fixé sur le rotor 18 de l'hélice 1, par exemple dans une embase annulaire de ce rotor 18, et dispose également d'un rotor fixé sur le module de transmission et de blocage 41, qui va maintenant être décrit en référence aux figures 2 et 3.

Le module 41, spécifique à la présente invention, comprend une première piste 50 sensiblement annulaire, appartenant à une première pièce annulaire 52 ou bague, centrée sur l'axe 4. Cette pièce 52, qui constitue de préférence la pièce externe du module, est destinée à être raccordée fixement sur la vis 38, par exemple à une extrémité aval de celle-ci. Alternativement, et comme montré sur la figure 1, cette pièce annulaire 52 peut faire partie intégrante de la vis, en constituant l'extrémité aval de celle-ci. Par conséquent, la rotation de cette pièce 52 est destinée à assurer le calage en incidence des pales, en particulier par l'intermédiaire du cône 28 décrit ci-dessus.

La première piste 50 est donc formée sur la surface intérieure de la bague 52, et présente une encoche 54 délimitée par deux surfaces B1 et B2. En coupe transversale telle que celle montrée sur la figure 3, les deux surfaces B1 et B2, chacune de préférence plane, forment conjointement un V orienté vers l'axe de l'hélice, à savoir radialement vers l'intérieur. L'angle du V est relativement ouvert, par exemple de valeur comprise entre 100 et 170°, la valeur étant en particulier choisie en fonction des coefficients de frottement des matériaux en présence, pour pouvoir générer un arc-boutement. A cet égard, le V est symétrique par rapport à une direction radiale passant par la pointe du V, l'angle entre chaque branche du V et la direction locale circonférentielle, à savoir la direction tangentielle, étant de préférence comprise entre 5 et 85°, toujours choisie préférentiellement en fonction des coefficients de frottement des matériaux en présence.

Le module 41 comprend une seconde piste 56 sensiblement annulaire, concentrique à la première piste, et appartenant à une seconde pièce annulaire 58 ou bague, centrée sur l'axe 4. Cette pièce 58, qui constitue de préférence la pièce interne du module, est destinée à être raccordée fixement sur l'arbre 16. Alternativement, et comme montré sur la figure 1, cette pièce annulaire 58 peut faire partie intégrante de l'arbre d'entraînement 16, en constituant un tronçon longitudinal de celui-ci. La seconde piste 56 est donc formée sur la surface extérieure de la bague 58.

Le module 41 est d'autre part équipé d'un élément d'actionnement 60 de la première piste, sensiblement annulaire, agencé entre les première et seconde pistes, et concentrique à celles-ci. Cet élément 60 est de préférence en contact annulaire avec la seconde piste 56, et éventuellement également en contact annulaire avec la première piste 50. Il est relié, de préférence directement, au rotor du moteur 40 afin de pourvoir être mis en rotation par ce dernier.

Il présente une portion angulaire évidée 62, délimitée par deux surfaces A1, A2 à distance l'une de l'autre dans la direction circonférentielle. En coupe transversale telle que celle montrée sur la figure 3, les deux surfaces A1 et A2, chacune de préférence plane, sont sensiblement orientées vers l'extérieur, à savoir vers la première piste 50, et plus spécifiquement vers son encoche 54. L'angle entre chaque surface A1, A2 et la direction locale circonférentielle, à savoir la direction tangentielle, est de préférence comprise entre 5 et 85°, et plus préférentiellement identique à l'angle défini ci-dessus entre la surface B1 ou B2 et la direction locale circonférentielle. Les deux surfaces A1, A2 sont également orientées, dans une certaine mesure, l'une vers l'autre, afin de former une portion supérieure d'un V s'ouvrant radialement vers l'extérieur, et dont la pointe à été volontairement supprimée pour faire place à la seconde piste 56.

De préférence, dans la position normale montrée sur la figure 3, qui sera explicitée ci-après, la surface A1 se trouve agencée sensiblement en regard et parallèle à la surface B2 de l'encoche, tandis que la surface A2 se trouve agencée sensiblement en regard et parallèle à la surface B1 de l'encoche.

De plus, les deux extrémités de l'élément d'actionnement 60 mobile en rotation sont agencées à distance l'une de l'autre dans la direction circonférentielle, afin de permettre le contact entre un élément de blocage 64 du module, et la seconde piste 56. Cet élément de blocage 64, de préférence en forme de rouleau d'axe parallèle à l'axe X, est en effet prévu entre les première et seconde pistes 50, 56, logé dans la portion angulaire évidée 62, et dans l'encoche 54 de la première piste.

La figure 3 représente le module 41 avec l'élément de blocage 64 occupant, durant le fonctionnement du turbomoteur, une position normale d'arc-boutement.

Dans cette position, il est d'une part en contact avec la seconde piste 56 en étant disposé entre les deux surfaces A1, A2, à distance de celles-ci, et d'autre part en contact avec l'encoche 54. Durant le fonctionnement du turbomoteur provoquant la rotation de l'hélice, une force aérodynamique s'exerce sur les pales, et engendre un couple C1 de sens donné sur la première pièce 52, en raison de son raccordement mécanique aux pales via le cône 28 et la vis 38.

Ce couple C1, schématisé par la flèche de la figure 3, provoque un premier effort de contact F1 de la surface B1 sur l'élément de blocage 64, la surface B1 correspondant effectivement à celle des deux surfaces B1, B2 de l'encoche située la plus en amont dans le sens donné du couple C1, ici le sens horaire. A titre indicatif, l'effort de contact F1 se décompose en un effort normal Fnl orthogonal à la surface B1, et un effort de frottement f1.

Cet effort F1 génère un effort de réaction R de la seconde piste 56 sur l'élément de blocage 64, se décomposant également en un effort normal Rn orthogonal localement à la piste 56, et un effort de frottement f.

Dans ce cas de figure, le rouleau 64 n'est de préférence en contact qu'avec les deux éléments B1, 56 précités. Le premier effort de contact F1 et l'effort de réaction R restant à l'intérieur du cône de frottement, ils assurent alors un arc-boutement des première et seconde pistes 50, 56, rendant celles-ci solidaires en rotation.

Dans cette position normale d'arc-boutement, quand le moteur 40, dit moteur de changement de pas, est à l'arrêt, la seconde piste 56 est entraînée en rotation par l'arbre 16, cette rotation étant transmise à la première piste 50 par l'arc-boutement, puis bien évidemment à la vis 38 solidaire portant la première piste 50. Par conséquent, l'ensemble constitué par les éléments 16, 18, 41, 38, 28, 6 est solidaire en rotation, et tourne donc dans un même sens et à une même vitesse de rotation appliquée par l'arbre 16, de sorte que le calage des pales n'est pas modifié. De plus, le blocage assuré de manière automatique par le rouleau 64 du module 41 constitue un système anti-retour rendant l'effort aérodynamique s'appliquant sur les pales sans impact sur l'incidence de celles-ci, qui reste donc conservée à la valeur initialement fixée.

Pour faire varier l'incidence des pales, le système 26 doit être piloté afin d'amener le rouleau 64 dans une autre position, dite de déblocage.

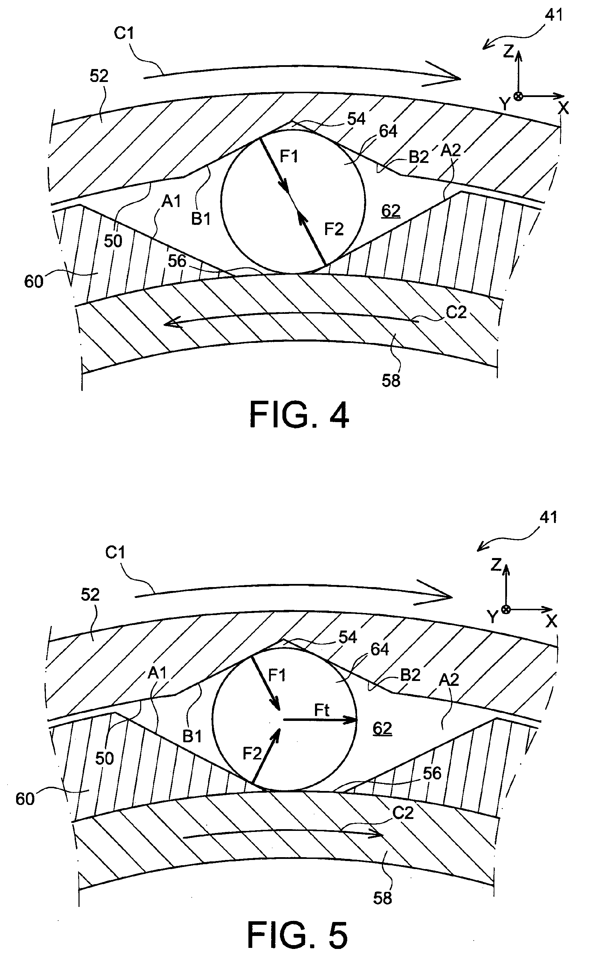

La figure 4 se rapporte au cas où les pales doivent être modifiées en incidence vers leur position d'incidence minimale.

Dans cette configuration, la position de déblocage de l'élément 64 est telle qu'il est au contact de la surface B1 de l'encoche la plus en amont, et aussi de la surface A2 de l'élément d'actionnement 60. Cette position de déblocage est assurée par l'application d'un couple d'actionnement C2 sur l'élément d'actionnement 60, par le moteur 40, l'entraînant donc à venir au contact du rouleau 64. Le couple d'actionnement C2, ici s'orientant dans le sens antihoraire, est de valeur permettant d'exercer, sur le rouleau 64, avec la surface A2 concernée, un second effort d'appui F2 suffisant pour rendre nul l'effort de réaction R de la seconde piste 56 sur ce rouleau. Ainsi, avec l'application du couple d'actionnement C2, le rouleau 64 n'est plus au contact que de la surface B1 et de la surface A2, et éventuellement également au contact de la surface B2, mais plus en contact avec la seconde piste 56. De préférence, les deux efforts F1, F2 sont de valeur identique, supportés par la même direction diamétrale du rouleau 64, et de sens opposés, ceci en particulier grâce au positionnement sensiblement parallèle des deux surfaces A2, B1.

L'arc-boutement observé dans la position normale est ainsi rompu.

Dans cette position de déblocage, il est donc autorisé le déplacement en rotation, par rapport à la seconde piste 56, de l'ensemble comportant la première piste 50, le rouleau 64 et l'élément d'actionnement 60, sous l'effet du couple d'actionnement C2 appliqué par le moteur.

Ainsi, le couple d'actionnement C2 permet simultanément de débloquer le module 41, et de provoquer la rotation de la bague 52 par rapport à la bague 58 de l'arbre 16.

Lorsque le moteur 40 est actionné pour délivrer ce couple C2, la vitesse de rotation de la vis 38 par rapport au stator 2 devient différente de celle du cône 28, par rapport au stator 2, avec ce cône 28 toujours solidaire du rotor 18, d'où la création d'une vitesse de rotation relative entre ces deux éléments, conduisant au coulissement désiré dans le sens 32a du cône 28 le long de la vis 38 restant immobile en translation par rapport au stator 2. C'est de cette manière, à savoir en pilotant le moteur 40 de manière à ce qu'il délivre à l'élément 60 un couple d'actionnement C2 de valeur appropriée, qu'il est possible de commander le calage des pales 6, de leur position d'incidence maximale vers leur position d'incidence minimale.

Une fois le moteur 40 arrêté, le module 41 est automatiquement ramené dans sa configuration assurant la position normale de blocage du rouleau 64, par l'intermédiaire de moyens élastiques de rappel couplés à l'élément d'actionnement 60, tel qu'un ressort (non représenté). Ce ressort permet en effet de déplacer en rotation cet élément d'actionnement 60 relativement à la première piste 50, de manière à rompre le contact entre le rouleau 64 et la surface A2, au profit d'un nouveau contact entre ce même rouleau 64 et la seconde piste 56 assurant l'arc-boutement.

Dans l'autre situation où les pales 6 doivent être modifiées en incidence vers leur position d'incidence maximale, la position de déblocage de l'élément 64, montrée sur la figure 5, est telle qu'il est au contact de la surface B1 de l'encoche la plus en amont, et aussi de la surface A1 de l'élément d'actionnement 60. Cette position de déblocage est assurée par l'application d'un couple d'actionnement C2 sur l'élément d'actionnement 60, par le moteur 40, l'entraînant donc à venir au contact du rouleau 64. Le couple d'actionnement C2, ici s'orientant dans le sens horaire, est de valeur permettant d'exercer, sur le rouleau 64, avec la surface A1 concernée, un second effort d'appui F2 suffisant pour rendre nul l'effort de réaction R de la seconde piste 56 sur ce rouleau. Ainsi, avec l'application du couple d'actionnement C2, le rouleau 64 n'est plus au contact que de la surface B1 et de la surface A1, et éventuellement également au contact de la surface B2, mais plus en contact avec la seconde piste 56. De préférence, les deux efforts F1, F2 sont de valeur identique, dont la résultante Ft est supportée par la direction tangentielle, ceci en particulier grâce à une inclinaison de valeur sensiblement identique entre d'une part la direction circonférentielle et la surface A1, et d'autre part la direction circonférentielle et la surface B1.

La force résultante Ft étant tangentielle, la réaction R de la piste 56 sur le rouleau 64 est nécessairement nulle. Par conséquent, l'arc-boutement observé dans la position normale est rompu.

Dans cette position de déblocage, il est donc autorisé le déplacement en rotation, par rapport à la seconde piste 56, de l'ensemble comportant la première piste 50, le rouleau 64 et l'élément d'actionnement 60, sous l'effet du couple d'actionnement C2 appliqué par le moteur.

Ainsi, le couple d'actionnement C2 permet simultanément de débloquer le module 41, et de provoquer la rotation de la bague 52 par rapport à la bague 58 de l'arbre 16, dans la direction du couple C2.

Ainsi, lorsque le moteur 40 est actionné pour délivrer ce couple C2, la vitesse de rotation de la vis 38 devient différente de celle du cône 28 toujours solidaire du rotor 18, d'où la création d'une vitesse de rotation relative entre ces deux éléments, conduisant au coulissement désiré dans le sens 32b du cône 28 le long de la vis 38 restant immobile en translation par rapport au stator 2. C'est de cette manière, à savoir en pilotant le moteur 40 de manière à ce qu'il délivre à l'élément 60 un couple d'actionnement C2 de valeur appropriée, qu'il est possible de commander le calage des pales 6, de leur position d'incidence minimale vers leur position d'incidence maximale.

Ici encore, une fois le moteur 40 arrêté, le module 41 est automatiquement ramené dans sa configuration assurant la position normale de blocage au rouleau 64, par l'intermédiaire des moyens élastiques de rappel précités, couplés à l'élément d'actionnement 60 en forme de bague tronçonnée.

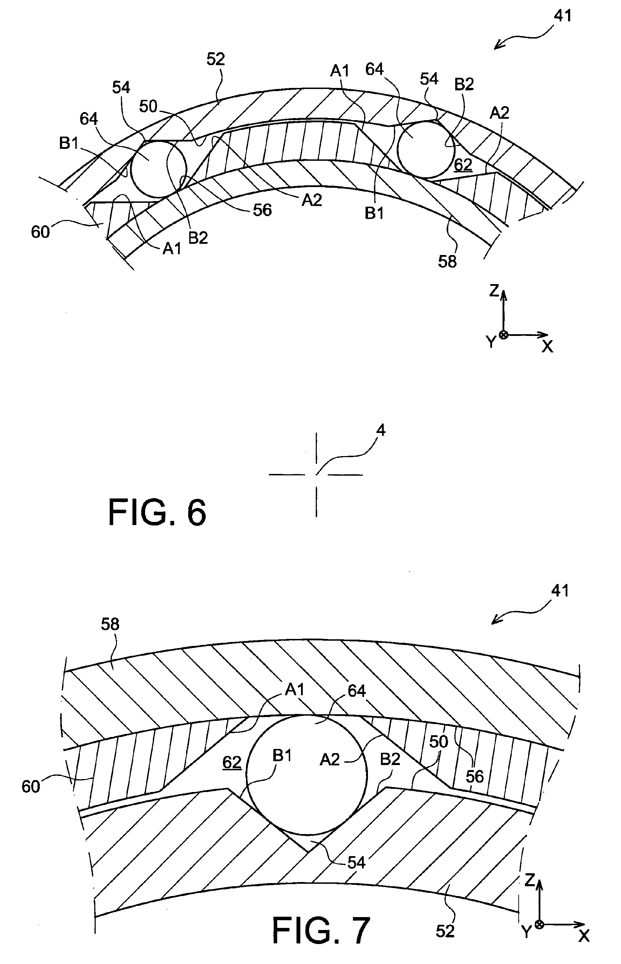

A cet égard, selon un autre mode de réalisation préféré de la présente invention, il est prévu plusieurs éléments de blocage 64 espacés angulairement les uns des autres autour de l'axe 4, comme montré sur la figure 6. Chacun est logé dans sa propre portion angulaire évidée 62 de l'élément d'actionnement 60, et dans sa propre encoche 54 de la première piste 50. Le moteur 40 est ici aussi conçu pour délivrer le couple d'actionnement C2 à l'élément 60, assurant la rupture des arcs-boutements créés par les rouleaux 64. Cette configuration permet globalement de répartir de façon plus homogène, dans la direction circonférentielle, les efforts assurant l'arc-boutement des première et seconde pistes.

En outre, il est noté que si l'élément de blocage 64 est de préférence un rouleau, et les surfaces A1, A2, B1, B2 avec lesquelles il coopère, des surfaces sensiblement planes, une alternative de réalisation peut consister à prévoir que l'élément de blocage est une bille, et les surfaces A1, A2, B1, B2 des surfaces sensiblement sphériques.

Enfin, en référence à la figure 7, il est noté qu'une configuration, dans laquelle la première piste 50 appartient à une bague intérieure 52 et la seconde piste 56 appartient à une bague extérieure 58, est envisageable, en particulier dans le cas où le système de commande s'applique au calage d'une seule pale de l'hélice. Dans un tel cas, un système de commande 26 est donc associé à chaque pale de cette hélice.

Bien entendu, diverses modifications peuvent être apportées par l'homme du métier à l'invention qui vient d'être décrite, uniquement à titre d'exemples non limitatifs.

## Revendications

1. Système (26) de commande de calage de pale d'une hélice d'un turbomoteur pour aéronef, comprenant :
- une première piste (50) sensiblement annulaire destinée à être raccordée à au moins une pale d'hélice (6), et dont la rotation est destinée à assurer le calage en incidence de cette pale, ladite première piste présentant au moins une encoche (54) délimitée par deux surfaces (B1 B2) ;
- une seconde piste (56) sensiblement annulaire, concentrique à la première piste ;
- un élément d'actionnement (60) de la première piste, sensiblement annulaire, agencé entre les première et seconde pistes et concentrique à celles-ci, ledit élément d'actionnement présentant au moins une portion angulaire évidée (62) délimitée par deux surfaces (A1 A2) à distance l'une de l'autre ; et **caractérisé en ce qu'**au moins un élément de blocage (64) est prévu entre les première et seconde pistes, logé dans ladite portion angulaire évidée de l'élément d'actionnement, et dans l'encoche de la première piste,
ledit élément de blocage étant apte à occuper, durant le fonctionnement du turbomoteur :
- une position normale d'arc-boutement, dans laquelle il est d'une part en contact avec la seconde piste (56) en étant disposé entre les deux surfaces (A1, A2) de l'élément d'actionnement, à distance de celles-ci, et d'autre part en contact avec l'encoche (54), position dans laquelle la force aérodynamique s'exerçant sur la pale de l'hélice en rotation engendre un couple (C1) de sens donné sur ladite première piste en provoquant un premier effort de contact (F1), sur l'élément de blocage (64), de celle des deux surfaces (B1 B2) de l'encoche située la plus en amont dans ledit sens donné du couple (C1), et générant un effort de réaction (R) de ladite seconde piste (56) sur ledit élément de blocage (64), le premier effort de contact (F1) et l'effort de réaction (R) assurant un arc-boutement des première et seconde pistes, rendant celles-ci solidaires en rotation ; et
- une position de déblocage, dans laquelle l'élément de blocage (64) est au contact de ladite surface (B1) de l'encoche la plus en amont, et aussi de l'une des deux surfaces (A1, A2) de l'élément d'actionnement (60), cette position de déblocage étant assurée par l'application d'un couple d'actionnement (C2) sur ledit élément d'actionnement, de valeur permettant d'exercer, sur l'élément de blocage (64) avec ladite surface (A1, A2) concernée, un second effort d'appui (F2) suffisant pour rendre nul ledit effort de réaction (R) de ladite seconde piste (56) sur ledit élément de blocage (64), et rompre ainsi ledit arc-boutement, ladite position de déblocage autorisant le déplacement en rotation, par rapport à la seconde piste, selon le sens du couple d'actionnement (C2), de l'ensemble comportant ladite première piste (50), ledit élément de blocage (64) et ledit élément d'actionnement (60).

2. Système de commande selon la revendication 1, **caractérisé en ce qu'**il comprend des moyens élastiques de rappel couplés audit élément d'actionnement, et permettant, lorsque ce dernier n'est pas soumis audit couple d'actionnement (C2), de déplacer en rotation cet élément d'actionnement relativement à ladite première piste (50), de manière à ramener ledit élément de blocage en position normale d'arc-boutement.

3. Système de commande selon la revendication 1 ou la revendication 2, **caractérisé en ce que** ladite première piste est disposée extérieurement par rapport à ladite seconde piste.

4. Système de commande selon la revendication 1 ou la revendication 2, **caractérisé en ce que** ladite seconde piste est disposée extérieurement par rapport à ladite première piste.

5. Système de commande selon l'une quelconque des revendications précédentes, **caractérisé en ce qu'**il comprend un moteur d'actionnement (40) commandant en rotation ledit élément d'actionnement (60).

6. Système de commande selon l'une quelconque des revendications précédentes, **caractérisé en ce que** ledit élément de blocage (64) est un rouleau, et **en ce que** lesdites surfaces (A1, A2, B1, B2) avec lesquelles il coopère sont des surfaces sensiblement planes.

7. Système de commande selon l'une quelconque des revendications 1 à 5, **caractérisé en ce que** ledit élément de blocage (64) est une bille, et **en ce que** lesdites surfaces (A1, A2, B1, B2) avec lesquelles il coopère sont des surfaces sensiblement sphériques.

8. Système de commande selon l'une quelconque des revendications précédentes, **caractérisé en ce qu'**il comprend plusieurs éléments de blocage (64) espacés angulairement les uns des autres autour de l'axe des première et seconde pistes, chacun logé dans sa propre portion angulaire évidée de l'élément d'actionnement, et dans sa propre encoche de la première piste.

9. Système de commande selon l'une quelconque des revendications précédentes, **caractérisé en ce qu'**il est destiné à commander une unique pale de l'hélice du turbomoteur.

10. Système de commande selon l'une quelconque des revendications 1 à 8, **caractérisé en ce qu'**il est destiné à commander simultanément une pluralité de pales de l'hélice du turbomoteur.

11. Système de commande selon la revendication 10, **caractérisé en ce qu'**il comporte un organe coulissant (28) destiné à coopérer avec les pales (6) de sorte que son déplacement conduise ces pales à se rapprocher / s'éloigner de leur position d'incidence minimale, ledit organe coulissant étant piloté par des moyens rotatifs de commande (38) permettant de transformer leur mouvement rotatif en un mouvement de coulissement dudit organe, lesdits moyens rotatifs de commande (38) étant solidaires en rotation de ladite première piste (50).

12. Hélice pour turbomoteur d'aéronef comprenant au moins un système (26) de commande de calage de pale selon l'une quelconque des revendications précédentes.

13. Hélice selon la revendication 12, **caractérisée en ce qu'**elle comprend un rotor d'hélice (18) destiné à tourner autour d'un axe longitudinal de l'hélice par rapport à un stator, et portant des pales (6), ladite hélice comprenant en outre ledit système de commande de calage (26) des pales, permettant de déplacer ces dernières entre une position d'incidence minimale et une position d'incidence maximale, ledit système de commande de calage comprenant un organe coulissant (28) selon l'axe longitudinal, coopérant avec lesdites pales de sorte que son déplacement conduise lesdites pales à se rapprocher / s'éloigner de leur position d'incidence minimale, ledit organe coulissant étant piloté par des moyens rotatifs d'actionnement (38) permettant de transformer leur mouvement rotatif autour de l'axe longitudinal en un mouvement de coulissement dudit organe selon le même axe, lesdits moyens rotatifs de commande (38) étant solidaires en rotation de ladite première piste (50) et la seconde piste (56) étant solidaire en rotation d'un arbre d'entraînement (16) portant ledit rotor d'hélice (18), ledit système de commande de calage comprenant en outre un moteur d'actionnement (40) permettant d'appliquer ledit mouvement rotatif auxdits seconds moyens rotatifs d'actionnement (38), en étant raccordés audit élément d'actionnement (60).

14. Hélice selon la revendication 13, **caractérisée en ce que** lesdits moyens rotatifs d'actionnement (38) sont constitués par une vis à billes.

15. Hélice selon la revendication 13 ou la revendication 14, **caractérisée en ce que** ledit organe coulissant (28) est constitué par un cône coulissant coopérant avec un doigt excentré (22) de chacune des pales lui étant associées.

16. Turbomachine pour aéronef comprenant au moins une hélice selon l'une quelconque des revendications 12 à 15.

17. Procédé de pilotage d'un système de commande de calage de pale d'une hélice d'un turbomoteur selon l'une quelconque des revendications 1 à 11, **caractérisé en ce que** lorsqu'un calage en incidence est requis, il est appliqué un couple d'actionnement approprié audit élément d'actionnement.

## Patentansprüche

1. Steuersystem (26) für die Blattverstellung einer Flugzeugtriebwerks-Luftschraube, das folgendes aufweist:
- eine erste, im wesentlichen ringförmige Bahn (50) zum Anschluss an mindestens ein Luftschraubenblatt (6), dessen Drehung dazu dient, die Verstellung im Anstellwinkel dieses Blattes zu gewährleisten, wobei die erste Bahn mindestens eine Einkerbung (54) aufweist, die durch zwei Flächen (B1 B2) begrenzt ist;
- eine zweite, im Wesentlichen ringförmige Bahn (56), die konzentrisch zu der ersten Bahn ist;
- ein Betätigungselement (60) der ersten, im wesentlichen ringförmigen Bahn, das zwischen der ersten und zweiten Bahn angeordnet und konzentrisch zu diesen ist, wobei das Betätigungselement mindestens einen ausgesparten Winkelabschnitt (62) aufweist, der durch zwei zueinander beabstandete Flächen (A1, A2) begrenzt ist; und **dadurch gekennzeichnet, dass** mindestens ein Blockierelement (64) zwischen der ersten und zweiten Bahn vorgesehen ist, das sich in dem ausgesparten Winkelabschnitt des Betätigungselementes und in der Einkerbung der ersten Bahn befindet,
wobei das Blockierelement geeignet ist, während des Betriebs des Triebwerks, folgende Positionen einzunehmen:
- eine normale Position des Verkantens, in der es einerseits mit der zweiten Bahn (56) in Kontakt ist, wobei es zwischen den beiden Flächen (A1, A2) des Betätigungselementes und im Abstand zu ihnen angeordnet ist, und andererseits mit der Einkerbung (54) in Kontakt ist, einer Position, in der die aerodynamische Kraft, die beim Drehen auf die Luftschraube ausgeübt wird, ein Kräftepaar (C1) in eine vorgegebene Richtung auf die erste Bahn erzeugt, indem es eine erste Kontaktkraft (F1), auf das Blockierelement (64), der beiden Flächen (B1 B2) der Einkerbung hervorruft, die am weitesten vom in der vorgegebenen Richtung des Kräftepaares (C1) angeordnet ist, und eine Reaktionskraft (R) der zweiten Bahn (56) auf das Blockierelement (64) erzeugt, wobei die erste Kontaktkraft (F1) und die Reaktionskraft (R) eine Verkantung der ersten und zweiten Bahn gewährleisten, die diese drehfest machen; und
- eine Freigabeposition, in der das Blockierelement (64) mit der Fläche (B1) der am weitesten vom liegenden Einkerbung und auch mit einer der Flächen (A1, A2) des Betätigungselementes (60) in Kontakt ist, wobei diese Freigabeposition durch Anwendung eines Betätigungsdrehmoments (C2) auf das Betätigungselement gewährleistet ist, das einen Wert hat, der es erlaubt, auf das Blockierelement (64) mit der betroffenen Fläche (A1, A2) eine zweite Druckkraft (F2) auszuüben, die ausreicht, so dass die Reaktionskraft (R) der zweiten Bahn (56) auf das Blockierelement (64) null beträgt, und so die Verkantung bricht, wobei die Freigabeposition die Verschiebung durch Drehung der Anordnung mit der ersten Bahn (50), dem Blockierelement (64) und dem Betätigungselement (60) gegenüber der zweiten Bahn entlang der Richtung des Betätigungsdrehmomentes (C2) erlaubt.

2. Steuersystem nach Anspruch 1, **dadurch gekennzeichnet, dass** es elastische Rückholelemente aufweist, die mit dem Betätigungselement verbunden sind, und es ermöglichen, wenn letzteres nicht dem Betätigungsdrehmoment (C2) unterliegt, dieses Betätigungselement gegenüber der ersten Bahn (50) durch Drehung zu verschieben, so dass das Blockierelement wieder in die normale Position der Verkantung gebracht wird.

3. Steuersystem nach Anspruch 1 oder Anspruch 2, **dadurch gekennzeichnet, dass** die erste Bahn gegenüber der zweiten Bahn außen angeordnet ist.

4. Steuersystem nach Anspruch 1 oder Anspruch 2, **dadurch gekennzeichnet, dass** die zweite Bahn gegenüber der ersten Bahn außen angeordnet ist.

5. Steuersystem nach einem der vorhergehenden Ansprüche, **dadurch gekennzeichnet, dass** es einen Antriebsmotor (40) aufweist, der das Betätigungselement (60) drehend steuert.

6. Steuersystem nach einem der vorhergehenden Ansprüche, **dadurch gekennzeichnet, dass** das Blockierelement (64) eine Rolle ist, und dass die Flächen (A1 A2, B1, B2), mit denen sie zusammenwirkt, im Wesentlichen ebene Flächen sind.

7. Steuersystem nach einem der Ansprüche 1 bis 5, **dadurch gekennzeichnet, dass** das Blockierelement (64) eine Kugel ist, und dass die Flächen (A1 A2, B1, B2), mit denen sie zusammenwirkt, im Wesentlichen sphärisch sind.

8. Steuersystem nach einem der vorhergehenden Ansprüche, **dadurch gekennzeichnet, dass** es mehrere Blockierelemente (64) besitzt, die um die Achse der ersten und zweiten Bahn winklig beabstandet sind, wobei sich jedes in seinem eigenen ausgesparten Winkelabschnitt des Betätigungselementes und seiner eigenen Einkerbung der ersten Bahn befindet.

9. Steuersystem nach einem der vorhergehenden Ansprüche, **dadurch gekennzeichnet, dass** es zur Steuerung eines einzelnen Luftschraubenblattes des Triebwerkes dient.

10. Steuersystem nach einem der Ansprüche 1 bis 8, **dadurch gekennzeichnet, dass** es zur gleichzeitigen Steuerung einer Vielzahl von Luftschraubenblättern des Triebwerkes dient.

11. Steuersystem nach Anspruch 10, **dadurch gekennzeichnet, dass** es ein verschiebbares Element (28) aufweist, das mit den Luftschraubenblättern (6) zusammenwirkt, so dass seine Verschiebung dazu führt, dass sich diese Blätter ihrem Mindestanstellwinkel annähern / sich von ihrem Mindestanstellwinkel entfernen, wobei das verschiebbare Element durch drehbare Steuerelemente (38) gesteuert wird, die es ermöglichen, ihre Drehbewegung in eine Schiebbewegung des Elementes umzuwandeln, wobei die drehbaren Steuerelemente (38) drehfest mit der ersten Bahn (50) verbunden sind.

12. Luftschraube für Flugzeugtriebwerk mit mindestens einem Steuersystem (26) für die Blattverstellung nach einem der vorhergehenden Ansprüche.

13. Luftschraube nach Anspruch 12, **dadurch gekennzeichnet, dass** sie einen Luftschraubenrotor (18) aufweist, der sich gegenüber einem Stator um eine Längsachse der Luftschraube dreht, und Luftschraubenblätter (6) aufweist, wobei die Luftschraube darüber hinaus das Steuersystem (26) für die Blattverstellung aufweist, so dass die Blätter zwischen einer Position mit Mindestanstellwinkel und einer Position mit maximalem Anstellwinkel verschoben werden können, wobei das Steuersystem zur Blattverstellung ein entlang der Längsachse verschiebbares Element (28) aufweist, das mit den Blättern zusammenwirkt, so dass seine Verschiebung dazu führt, dass sich die Blätter ihrem Mindestanstellwinkel annähern / sich von ihrem Mindestanstellwinkel entfernen, wobei das verschiebbare Element durch drehbare Steuerelemente (38) gesteuert wird, die es ermöglichen, ihre Drehbewegung um die Längsachse in eine Schiebbewegung des Elementes entlang derselben Achse umzuwandeln, wobei die drehbaren Steuerelemente (38) drehfest mit der ersten Bahn (50) verbunden sind, und die zweite Bahn (56) drehfest mit einer Antriebswelle (16) verbunden ist, die den Luftschraubenrotor (18) aufweist, wobei das Steuersystem für die Blattverstellung darüber hinaus einen Antriebsmotor (40) aufweist, mit dem die Drehbewegung auf die zweiten drehbaren Steuerelemente (38) angewendet werden kann, indem sie mit dem Betätigungselement (60) verbunden werden.

14. Luftschraube nach Anspruch 13, **dadurch gekennzeichnet, dass** die drehbaren Steuerelemente (38) eine Kugelumlaufspindel aufweisen.

15. Luftschraube nach Anspruch 13 oder Anspruch 14, **dadurch gekennzeichnet, dass** das verschiebbare Element (28) einen verschiebbaren Kegel aufweist, der mit einem exzentrischen Zapfen (22) zusammenwirkt, der mit jedem der Blätter verbunden ist.

16. Flugzeugtriebwerk mit mindestens einer Luftschraube nach einem der Ansprüche 12 bis 15.

17. Verfahren zur Regelung eines Steuersystems für die Blattverstellung einer Flugzeugtriebwerks-Luftschraube nach einem der Ansprüche 1 bis 11, **dadurch gekennzeichnet, dass**, wenn eine Verstellung im Anstellwinkel erforderlich ist, ein geeignetes Betätigungsdrehmoment auf das Betätigungselement angewendet wird.

## Claims

1. System (26) for controlling the blade pitch of a propeller of a turboshaft engine for aircraft, comprising:
- a substantially annular first track (50) intended to be connected to at least one propeller blade (6), and of which the rotation is intended to provide for the setting of the incidence of this blade, said first track having at least one notch (54) delimited by two surfaces (B1 B2);
- a second substantially annular track (56), concentric to the first track;
- a member for actuating (60) the first track, substantially annular, arranged between the first and second tracks and concentric to the latter, said member for actuating having at least one recessed angular portion (62) delimited by two surfaces (A1, A2) at a distance from one another; and
**characterized in that** at least one locking member (64) is provided between the first and second tracks, housed in said recessed angular portion of the member for actuating, and in the notch of the first track,
said locking member being able to occupy, during the operation of the turboshaft engine:
- a normal over-centre position, wherein it is on the one hand in contact with the second track (56) by being arranged between the two surfaces (A1, A2) of the member for actuating, at a distance from the latter, and on the other hand in contact with the notch (54), position wherein the aerodynamic force is exerted on the blade of the propeller in rotation generates a torque (C1) of a given direction on said first track by causing a first contact force (F1), on the locking member (64), of that of the two surfaces (B1, B2) of the notch located the farthest upstream in said given direction of the torque (C1), and generating a reaction force (R) of said second track (56) on said locking member (64), the first contact force (F1) and the reaction force (R) providing an over-centring of the first and second tracks, rendering the latter integral in rotation; and
- a release position, wherein the locking member (64) is in contact with said surface (B1) of the notch farthest upstream, and also with one of the two surfaces (A1, A2) of the member for actuating (60), this release position being provided by the application of an actuating torque (C2) on said member for actuating, of a value making it possible to exert, on the locking member (64) with said surface (A1, A2) concerned, an second bearing force (F2) that is sufficient to render null said reaction force (R) of said second track (56) on said locking member (64), and as such break said over-centring, said release position authorising the displacement in rotation, in relation to the second track, according to the direction of the actuating torque (C2), of the unit comprising said first track (50), said locking member (64) and said member for actuating (60).

2. System for controlling according to claim 1, **characterised in that** it comprises means of elastic return coupled to said member for actuating, and making it possible, when the latter is not subjected to said actuating torque (C2), to displace in rotation this member for actuating relatively to said first track (50), in such a way as to bring back said locking member into normal over-centre position.

3. System for controlling according to claim 1 or claim 2, **characterised in that** said first track is arranged exteriorly in relation to said second track.

4. System for controlling according to claim 1 or claim 2, **characterised in that** said second track is arranged exteriorly in relation to said first track.

5. System for controlling according to any of the preceding claims, **characterised in that** it comprises an actuating motor (40) controlling in rotation said member for actuating (60).

6. System for controlling according to any of the preceding claims, **characterised in that** said locking member (64) is a roller, and **in that** said surfaces (A1, A2, B1, B2) with which it cooperates are substantially flat surfaces.

7. System for controlling according to any of claims 1 to 5, **characterised in that** said locking member (64) is a ball, and **in that** said surfaces (A1, A2, B1, B2) with which it cooperates are substantially spherical surfaces.

8. System for controlling according to any of the preceding claims, **characterised in that** it comprises several locking members (64) angularly spaced from one another around the axis of the first and second tracks, each housed in its own recessed angular portion of the member for actuating, and in its own notch of the first track.

9. System for controlling according to any of the preceding claims, **characterised in that** it is intended to control a single blade of the propeller of the turboshaft engine.

10. System for controlling according to any of claims 1 to 8, **characterised in that** it is intended to simultaneously control a plurality of blades of the propeller of the turboshaft engine.

11. System for controlling according to claim 10, **characterised in that** it comprises a sliding member (28) intended to cooperate with the blades (6) in such a way that its displacement leads these blades to come closer / move away from their minimum incidence position, said sliding member being controlled by rotating means of control (38) making it possible to transform their rotating movement into a sliding movement of said member, said rotating means of control (38) being integral in rotation with said first track (50).

12. Propeller for aircraft turboshaft engine comprising at least one system (26) for controlling the blade pitch according to any of the preceding claims.

13. Propeller according to claim 12, **characterised in that** it comprises a propeller rotor (18) intended to rotate around a longitudinal axis of the propeller in relation to a stator, and carrying blades (6), said propeller further comprising said system for controlling the pitch (26) of the blades, making it possible to displace the latter between a minimum incidence position and a maximum incidence position, said system for controlling the pitch comprising a sliding member (28) according to the longitudinal axis, cooperating with said blades in such a way that its displacement drives said blades to come closer / move away from their minimum incidence position, said sliding member being controlled by rotating means of actuating (38) making it possible to transform their rotating movement around the longitudinal axis into a sliding movement of said member according to the same axis, said rotating means of control (38) being integral in rotation with said first track (50) and the second track (56) being integral in rotation with a drive shaft (16) carrying said propeller rotor (18), said system for controlling the pitch further comprising an actuating motor (40) making it possible to apply said rotating movement to said second rotating means of actuating (38), by being connected to said member for actuating (60).

14. Propeller according to claim 13, **characterised in that** said rotating means of actuating (38) are comprised of a ball screw.

15. Propeller according to claim 13 or claim 14, **characterised in that** said sliding member (28) is comprised of a sliding cone cooperating with an off-centred finger (22) of each of the blades being associated with it.

16. Turbomachine for aircraft comprising at least one propeller according to any of claims 12 to 15.

17. Method for controlling a system for controlling propeller blade pitch in a turboshaft engine according to any of claims 1 to 11, **characterised in that** when a setting of the incidence is required, a suitable actuating torque is applied to said member for actuating.
